# EUROPEAN PATENT APPLICATION

(11) **EP 4 439 740 A1**
(43) Date of publication of application: **02.10.2024**
(21) Application number: 22898216.1
(22) Date of filing: 22.09.2022
(51) Int. Cl.: H01M 4/90, H01M 4/92, H01M 8/10

(54) **ELECTRODE CATALYST INCLUDING IRIDIUM OXIDE NANOSHEET AS CATALYTIC PROMOTER**

(30) Priority: 28.11.2021 JP 2021192613
(71) Applicant: SHINSHU UNIVERSITY, Matsumoto City, Nagano, 390-8621 (JP)
(72) Inventor: SUGIMOTO, Wataru, Ueda City, Nagano 386-8567 (JP); HUANG, Ting-Wei, Ueda City, Nagano 386-8567 (JP)
(74) Representative: Mewburn Ellis LLP
(86) International application number: PCT/JP2022/035320
(87) International publication number: WO 2023/095431

(57) **Abstract**

To provide an electrode catalyst exhibiting high performance as a reversal-resistant anode catalyst in fuel cells.

The above-described problem is solved by an electrode catalyst constituted by a composite catalyst obtained by mixing an iridium oxide (IrO₂) nanosheet with a Pt/C catalyst as a promoter. A weight ratio (percentage) of the IrO₂ nanosheet to a sum of the Pt/C and the IrO₂ nanosheet is preferably within a range of 1% or more and 26% or less, and a Pt:Ir (atomic ratio) constituting the composite catalyst is preferably within a range of 1.5:1 to 50:1.

## Description

### Field of the Invention

The present invention relates to an electrode catalyst including an iridium oxide nanosheet as a promoter and exhibiting high performance as a reversal-resistant anode catalyst in fuel cells.

### BACKGROUND ART

A polymer electrolyte fuel cell (abbreviated as "PEFC") is expected to be a power source for vehicles with low carbon emissions and high energy conversion efficiency, and development is underway to achieve higher performance. A particularly recent development issue is the problem of rapid catalyst degradation when a PEFC enters a reversal state. For example, in cold climates, water in the cell may freeze, causing flow path blockage and leading to shortage of hydrogen fuel. When this happens, the original anode undergoes a cathodic reaction, the cathode undergoes an anodic reaction, and the cell voltage turns to a negative value (cell reversal). When fuel is depleted in the anode, an anode potential rises above 1.5 V (cell reversal state) and the carbon in the carrier is severely oxidized, leading to performance degradation.

It should be noted that Patent Documents 1 and 2 are related applications by the present inventors, and Non-Patent Documents 1 and 2 are references that will be cited in examples described below.

### PRIOR ART DOCUMENTS

### Patent Documents

Patent Document 1: Japanese Laid-Open Patent Application Publication No. 2015-171966
Patent Document 2: Japanese Laid-Open Patent Application Publication No. 2017-141158

### Non-Patent Documents

Non-Patent Document 1: G. Shi, H. Yano, D. A. Tryk, A. Iiyama, and H. Uchida, ACS Catal., 7, 267 (2017). doi: 10. 1021/acscatal. 6b02794
Non-Patent Document 2: G. Shi, D. A. Tryk, T. Iwataki, H. Yano, M. Uchida, A. Iiyama, and H. Uchida, J. Mater. Chem. A, 8, 1091 (2020). doi: 10. 1039/C9TA12023H

### SUMMARY OF THE INVENTION

### Problems to be Solved by the Invention

As described above, when the hydrogen, which is fuel, is depleted when the fuel cell stops working and oxygen crosses over to the anode, the anode potential becomes high (cell reversal state), resulting in degradation of the electrode catalyst. This is a cell reversal reaction in which the original hydrogen electrode reacts as an oxygen electrode, and the development of a reversal-resistant anode catalyst (also referred to as a "fuel shortage-resistant anode") that suppresses this reaction is desired.

The present invention has been made to solve the above-described problems, and an object thereof is to provide an electrode catalyst exhibiting high performance as a reversal-resistant anode catalyst in fuel cells.

### Means for Solving the Problems

An electrode catalyst according to the present invention is a composite catalyst obtained by mixing an iridium oxide (IrO₂) nanosheet with a Pt/C (platinum-supported carbon) catalyst as a promoter.

According to this invention, the electrode catalyst is constituted by a composite catalyst obtained by mixing an IrO₂ nanosheet with a Pt/C catalyst as a promoter, and thus exhibits high performance as a reversal-resistant anode catalyst for fuel cells. It should be noted that, although use of iridium, iridium oxide nanoparticles, and the like as a promoter has been known, there have been no examples of mixing an IrO₂ nanosheet as a promoter, and this is promising as a new electrode catalyst.

In the electrode catalyst according to the present invention, a weight ratio (percentage) of the IrO₂ nanosheet to a sum of the Pt/C and the IrO₂ nanosheet is within a range of 1% or more and 26% or less.

In the electrode catalyst according to the present invention, a Pt:Ir (atomic ratio) constituting the composite catalyst is within a range of 1.5:1 to 50:1.

### Effect of the Invention

According to the present invention, it is possible to provide an electrode catalyst exhibiting high performance as a reversal-resistant anode catalyst in fuel cells.

### BRIEF DESCRIPTION OF THE DRAWINGS

Fig. 1 is a flowchart of a reversal resistance test, (a) showing a procedure of the reversal resistance test, and (b) showing a procedure of the reversal resistance test combined with a hydrogen oxidation reaction (HOR) activity evaluation.
Fig. 2 shows linear sweep voltammetry (LSV) results of (a) a Pt/C catalyst and (b) a Pt/C-IrO₂ nanosheet-26.
Fig. 3 shows the LSV data of each sample.
Fig. 4 (a) shows the results of a chronopotentiometry (CP) test simulating cell reversal of the Pt/C catalyst, and Fig. 4 (b) shows the results of cyclic voltammetry (CV) test after implementation of the CP at various currents.
Fig. 5 (a) shows the results of a CP test simulating cell reversal of a Pt/C-IrO₂ nanosheet-5, and Fig. 5 (b) shows the results of CV test after implementation of the CP at various currents.
Fig. 6 (a) shows the results of a CP test of a Pt/C-IrO₂ nanosheet-3 at each set current, and Fig. 6 (b) shows the results of CV test after implementation of the CP at various currents. Fig. 6 (c) shows the results of a CP test of a Pt/C-IrO₂ nanosheet-1 at each set current, and Fig. 6 (b) shows the results of CV test after implementation of the CP at various currents.
Fig. 7 (a) is a low-potential polarization curve (chronoamperometric (CA) curve) at 20 mV (RHE) for Pt/C, and Fig. 7 (b) is a CA plot at 20 mV (RHE) of the Pt/C-IrO₂ nanosheet-5.
Fig. 8 shows Koutecky-Levich (K-L) plots at 20 mV (RHE) obtained from LSV data implemented at different rotating speeds, (a) being the results of the Pt/C and (b) being the results of the Pt/C-IrO₂ nanosheet-5 before and after the reversal resistance test.
Fig. 9 (a) is a transmission electron microscope (TEM) image of unused Pt/C and Fig. 9 (b) is a TEM image of the Pt/C after the test. Fig. 9 (c) is a TEM image of an unused Pt/C-IrO₂ nanosheet-5 and Fig. 9 (d) is a TEM image of the Pt/C-IrO₂ nanosheet-5 after the test.

### Embodiments of the Invention

The following describes in detail an electrode catalyst according to the present invention. The present invention, however, is not limited to the following description, within the range included in the technical scope thereof.

An electrode catalyst according to the present invention is a composite catalyst obtained by mixing an iridium oxide (IrO₂) nanosheet with a Pt/C (platinum-supported carbon) catalyst as a promoter. This way, the electrode catalyst was found to exhibit high performance as a reversal-resistant anode catalyst for fuel cells. It should be noted that, although use of iridium, iridium oxide nanoparticles, and the like as a promoter has been known, there have been no examples of mixing an iridium oxide nanosheet as a promoter, and this is promising as a new electrode catalyst.

An iridium oxide nanosheet (IrO₂ nanosheet) is a nano-order iridium oxide single-crystal sheet having a thickness of about 0.4 nm or more and 3 nm or less. This iridium oxide nanosheet is produced by, as described in the experimental examples below, first causing an alkylammonium or an alkylamine to react with a layered iridate to form an alkylammonium - layered iridate intercalation compound, and subsequently mixing the alkylammonium - layered iridate intercalation compound with a solvent such as water to obtain an iridium oxide nanosheet dispersed liquid (dark blue dispersed solution). It should be noted that while various materials can be used as the alkylammonium or the alkylamine, tetrabutylammonium or the like, for example, can be preferably used.

In the present invention, the layered iridate salt is synthesized, the layered iridate is synthesized from the layered iridate salt, and the iridium oxide nanosheet is obtained from the layered iridate. Iridium oxide particles and iridium oxide nanosheets have been used as electrode catalysts of dimensionally stable electrodes for electrolysis, chlorine generation, metal ion separation, and the like, but there are no examples of using a composite catalyst mixed as a promotor of a Pt/C catalyst as a reversal-resistant anode catalyst for fuel cells.

A Pt:Ir (atomic ratio) constituting the composite catalyst is preferably within a range of 1.5:1 to 50:1, and such a composite catalyst can be preferably used as a reversal-resistant anode catalyst for fuel cells. It should be noted that the Pt/C applied may be the conventionally known Pt/C described in Japanese Laid-Open Patent Application Publication No. 2011-134477, for example.

### Examples

In the following experiments, the present invention will be more specifically described.

### [Materials]

Commercial reagents were prepared for hydrochloric acid (HCl), 2-propanol (IPA), a 10% tetrabutylammonium hydroxide (TBAOH) solution, nitric acid (HNO₃), potassium carbonate (K₂CO₃), ethanol, methanol, and iridium (IV) oxide (IrO₂), respectively. 0.1 MHClO₄ was prepared by diluting 70% perchloric acid (HClO₄). A dispersed liquid of 5-wt% Nafion (trademark) was also prepared with a commercial reagent. A Pt/C catalyst containing 46.3-wt% Pt was also prepared with a commercial product.

### [Synthesis of Pt/C-IrO₂ Nanosheet Composite Catalyst]

An IrO₂ nanosheet was fabricated by chemical exfoliation of layered iridium oxide in accordance with the method described in Patent Documents 1 and 2. A 0.53 mg/L of IrO₂ nanosheet/TBAOH colloid (referred to as "IrO₂ nanosheet dispersed liquid") obtained by centrifuging was used in this experiment. The composite catalyst was obtained by directly mixing the Pt/C catalyst and the IrO₂ nanosheet. 18.5 mg of the Pt/C was dispersed in a 75% IPA solution to obtain a Pt/C dispersed liquid, and 5 mL of the IrO₂ nanosheet dispersed liquid was added thereto and mixed well. Subsequently, the mixture was heated to 80°C for three hours to obtain a dry powder. Next, the aforementioned dry powder was dispersed in a 75% IPA solution and stirred thoroughly, and then a diluted Nafion solution was added as a binding material. This composite catalyst consisted of 74-wt% Pt/C and 26-wt% IrO₂ nanosheet, and is herein referred to as a "Pt/C-IrO₂ nanosheet-26."

In this experiment, composite catalysts fabricated with different proportions of the IrO₂ nanosheet were prepared to study the optimal composite catalyst. The ratio of the Pt/C dispersed liquid to the IrO₂ nanosheet dispersed liquid was arbitrarily varied. Table 1 shows the parameters of all composite catalysts synthesized in this experiment. Each composite catalyst was synthesized in the same way as that of the Pt/C-IrO₂ nanosheet-26.

**[Table 1]**

| Name | Pt/KB source solution | IrO₂ns/TBAOH colloid | Resulted Pt:Ir0₂ns atomic ratio | Resluted Ir0 ₂ns wt.°k |
|---|---|---|---|---|
| Pt/KB- Ir0₂ns-26 | 10 ml | 5 ml | 3:2 | 26 |
| Pt/KB-Ir0₂ns-15 | 10 ml | 2.5 ml | 3:1 | 15 |
| Pt/KB-Ir0₂ns-5 | 10 ml | 0.75 ml | 10:1 | 5 |
| Pt/KB-Ir0₂ns-3 | 10 ml | 0.43 ml | 17.6:1 | 3 |
| Pt/KB-Ir0₂ns-1 | 10 ml | 0.15 ml | 50:1 | 1 |

### [Evaluation of Electrochemical Characteristics]

The electrochemical characteristics were evaluated using a rotating disk electrode (manufactured by Nikko Keisoku, model name: SC-5) connected to a potentiostat (manufactured by Hokuto Denko, model name: HZ-7000). In a three-electrode cell, carbon fiber was used as a counter electrode and a reversible hydrogen electrode (RHE) was used as a reference electrode. All electrochemical measurements were performed in 0.1 MHClO₄ degassed with N₂, except for hydrogen oxidation reaction (HOR) activity measurements.

A working electrode was fabricated by using a mirror-polished glassy carbon (GC) electrode (6 mm in diameter) as a collector and dripping a predetermined amount of electrode catalyst onto the electrode. Next, the diluted Nafion solution was added as a binding material. The amount of catalyst added on the GC was set to 17.3 µg/cm².

An oxygen evolution reaction (OER) evaluation was performed by CV of 1.0 to 1.7 V (RHE) at a rotating speed of 1600 rpm and a sweep rate of 10 mV/sec, and the OER activity was compared at a current value (IR corrected) of 1.5 V (RHE).

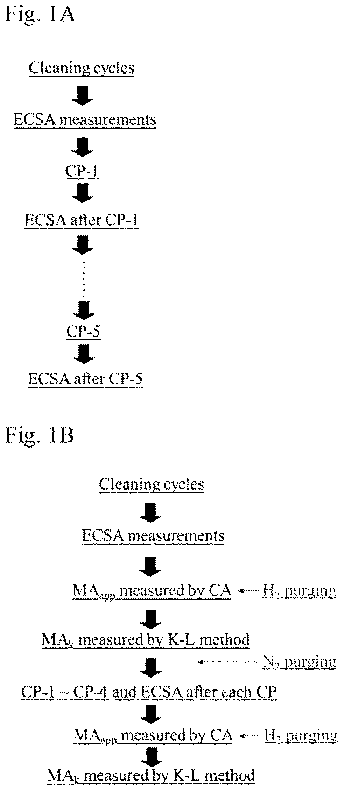

The procedure for the reversal resistance test is shown in Fig. 1 (a). The test temperature was set to 60°C, the rotating speed of the electrode was set to 1600 rpm, the potential sweep rate was set to 20 mV/sec, and the potential scanning range was set to 0.05 V to 1.2 V. Data of the third cycle was used to calculate an electrochemical surface area (ECSA). Next, the first chronopotentiometry (CP) test (CP-1) at a current density of 35.3 µA/cm² and a holding time of 20 minutes was performed as the first step of the reversal resistance test. Subsequently, the current densities were increased sequentially to 106 µA/cm², 176 µA/cm², 247 µA/cm², and 353 µA/cm² and set as CP-2, CP-3, CP-4, and CP-5 in that order, respectively, and the corresponding ESCA after each CP was also recorded.

The apparent HOR activity (MAapp) was evaluated by a chronoamperometric (CA) curve. The current value after 40 minutes at a low potential polarization of 20 mV (RHE) was set. The HOR mass activity (MAk) was calculated from the active dominant current by varying the electrode rotating speed of the rotating disk electrode and using the Koutecky-Levich equation. The potential range was set to -0.08 V to 0.5 V (RHE), and linear sweep voltammetry (LSV) was performed at rotating speeds of 400 rpm, 800 rpm, 1200 rpm, 1600 rpm, 2200 rpm, and 2500 rpm.

A flowchart shown in Fig. 1 (b) is a procedure of the reversal resistance test combined with an HOR activity evaluation. The HOR activity was measured before and after the CP, varying the current density to 16 µA/cm² (CP-1), 36 µA/cm² (CP-2), 60 µA/cm² (CP-3), and 84 µA/cm² (CP-4).

### [Form Observation]

Pt particle sizes of the samples before and after the tests were evaluated by a transmission electron microscope (TEM).

### [Experimental Results]

### (OER activity of different composite catalysts)

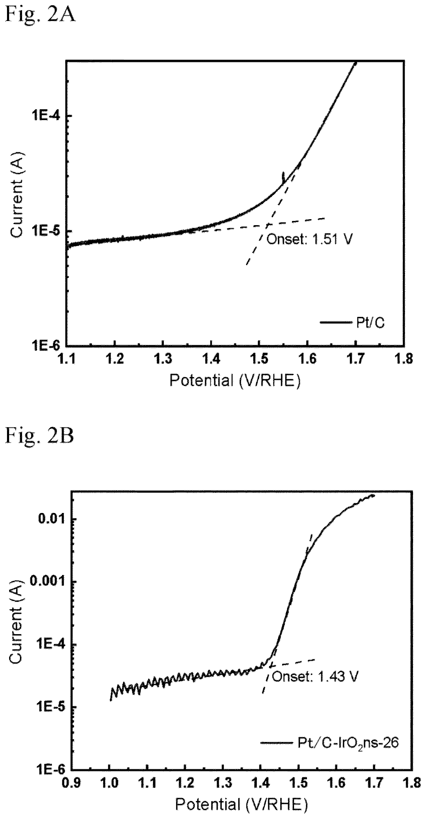

As shown in Fig. 2 (a) and Fig. 2 (b), the OER starting potentials of the Pt/C catalyst and the Pt/C-IrO₂ nanosheet-26 were 1.51 V (RHE) and 1.43 V (RHE), respectively. The Pt/C-IrO₂ nanosheet catalysts all exhibited similar OER starting potentials in the vicinity of 1.43 V (RHE), regardless of IrO₂ content.

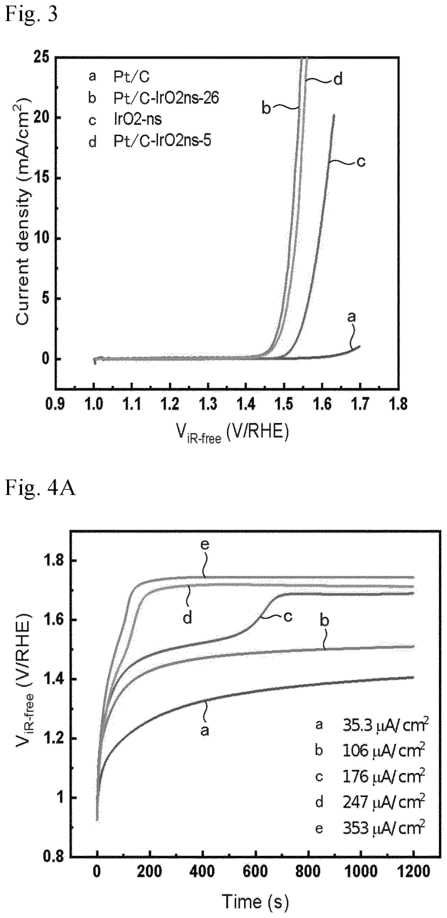

Fig. 3 shows the LSV data of each sample. The current density at 1.5 V (RHE) was selected as an indicator of OER activity. As shown in Fig. 3, the OER activities of the IrO₂ (nanosheet; reference sign c in Fig. 3) and the Pt/C-IrO₂ nanosheet-26 (reference sign b in Fig. 3) were 0.25 mA/cm² and 5.83 mA/cm², respectively. The exhibited activity of the composite catalyst including 26-wt% IrO₂ nanosheets was about 20 times higher than that of the IrO₂ nanosheet. The activity of IrO₂ nanosheet-supported carbon being higher than that of an unsupported IrO₂ nanosheet is considered to reflect a difference in a dispersibility of the IrO₂. Desirably, the content of the expensive and rare IrO₂ is as low as possible. The OER activity of a Pt/C-IrO₂ nanosheet-5 (reference sign d in Fig. 3) was 4.38 mA/cm². The reason for the current density being lower than that of the Pt/C-IrO₂ nanosheet-26 is the lower amount of the IrO₂ nanosheet. Eighty percent of the current density was obtained with one-fifth of the amount of the IrO₂ nanosheet, which means that the dispersibility of the IrO₂ nanosheet was improved and a surface utilization rate thereof was further enhanced.

The OER activity of the Pt/C-IrO₂ nanosheet-5 (reference sign d in Fig. 3) is 18 times greater than that of the Pt/C (reference sign a in Fig. 3). All of the results described above indicate that the IrO₂ nanosheet acts as an OER promoter. In the present invention, the composite catalyst including the IrO₂ nanosheet functioning as a promoter of OER activity was evaluated for its function as a reversal-resistant anode catalyst of PEFC anodes in consideration of its assistance in suppressing carbon oxidation during fuel cell operation under fuel shortage conditions.

### [Reversal Resistance Tests]

### (Reversal resistance test of Pt/C)

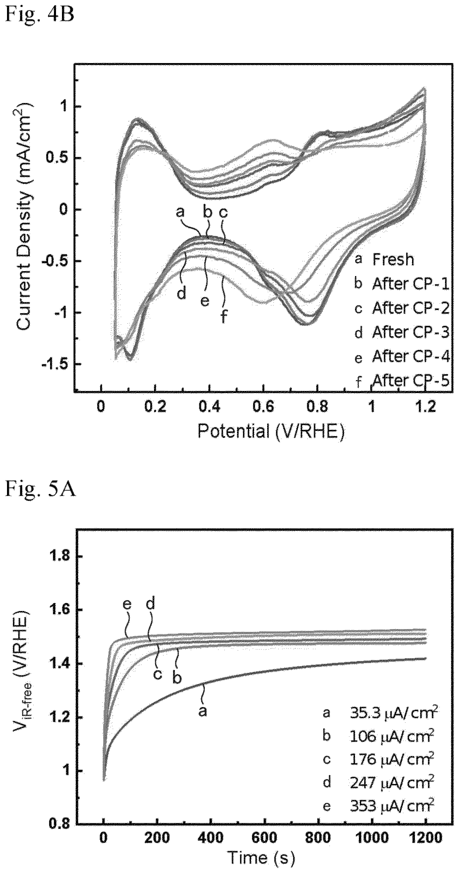

For the reversal resistance test, the CPs (35.3 µA/cm², 106 µA/cm², 176 µA/cm², 247 µA/cm², and 353 µA/cm²) were set, and the CV was measured before and after each CP test and evaluated as a change in ECSA. The results of the CP at each current density for the Pt/C catalyst are shown in Fig. 4 (a), and the results of the CV after each constant current CP are shown in Fig. 4 (b).

The CP results shown in Fig. 4 (a) indicate that, in the Pt/C, each potential rise in a case in which the currents of CP-1 (35.3 µA/cm²: reference sign a in Fig. 4 (a)) and CP-2 (106 µA/cm²: reference sign b in Fig. 4 (a)) were applied was less than 1.5 V (RHE). The ECSA calculated from hydrogen adsorption at 0.05 to 0.30 V (RHE) of the CV measured after the CP (Fig. 4 (b)) went from 87.2 m²/g initially to 85.9 m²/g after CP-1 and 78.8 m²/g after CP-2 (approximately 90% of the initial value). From this, it can be said that, under CP-1 and CP-2 conditions, the OER on the Pt surface is the main reaction and catalyst degradation is limited.

On the other hand, under the conditions of CP-3 (176 µA/cm²: reference sign c in Fig. 4 (a)), after a potential rose to 1.5 V (RHE) and reached a constant potential (this is called the "first plateau"), the potential rose again to 1.65 V (RHE) at 600 seconds (this is called the "second plateau"). In the case of CP-4 (247 µA/cm²: reference sign d in Fig. 4 (a)) and CP-5 (353 µA/cm²: reference sign e in Fig. 4 (a)), the potential rose immediately to the second plateau without going through the first plateau. After CP-3 and CP-4, the ECSA of the Pt/C changed to 66.6 m²/g and 57.3 m²/g, respectively, and finally decreased to 48.9 m²/g (55% of unused Pt) after CP-5.

Further, focusing on changes in an electrochemical double layer (EDL) region of 0.3 V to 0.6 V (RHE) of the CV, an increase in current density due to an increased surface area of the carrier carbon was observed after the CP. Furthermore, the redox peak caused by hydroquinone/quinone observed in the vicinity of 0.6 V also increased. These changes indicate oxidative degradation of the carrier carbon, and are especially significant after CP-3, CP-4, and CP-5.

The behavior of the change to the first plateau (1.5 V (RHE)) and the second plateau (1.65 V (RHE)) is similar to the cell voltage rise behavior observed in fuel cell single cells under fuel shortage conditions, where the first plateau is caused by a water electrolysis reaction (OER) and the second plateau is caused by a carbon oxidation reaction.

### (Reversal resistance test of Pt/C-IrO₂ nanosheet-5)

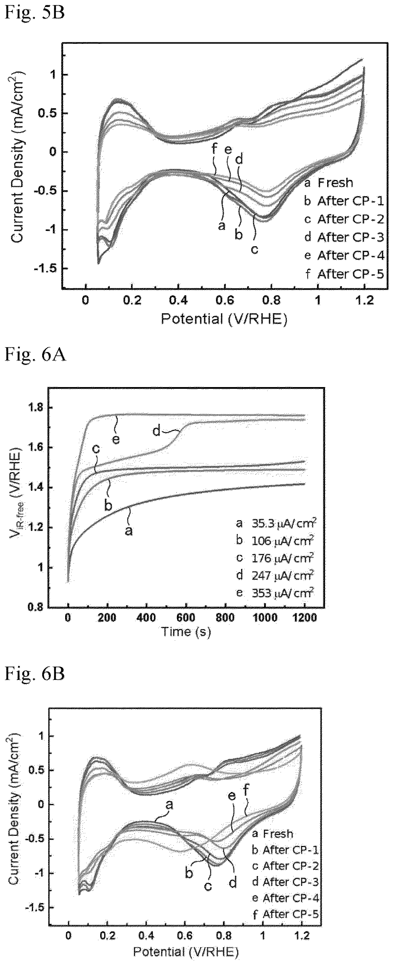

The results of the reversal resistance test of the Pt/C-IrO₂ nanosheet-5 composite catalyst are shown in Fig. 5 (a). In the case of the Pt/C-IrO₂ nanosheet-5 composite catalyst, even with CP-5 (353 µA/cm²: reference code e in Fig. 5 (a)) having the highest current density, the potential never reaches the second plateau and only rises to the first plateau (OER). The CV results measured after each CP step are shown in Fig. 5 (b). The changes in the EDL region and quinone/hydroquinone redox peaks are small, clearly indicating that the oxidative degradation of the carrier carbon is suppressed by forming a composite with the IrO₂ nanosheet.

Focusing on ECSA change after the CP, the unused composite catalyst was 71 m²/g, and was 39 m²/g after CP-5 (45% reduction). This suggests that the Pt was degraded during the OER reaction, although carbon oxidation degradation was suppressed. The reason for ECSA attenuation is described below.

### [Reversal Resistance Test of Pt/C-IrO₂ Nanosheet-3 and Pt/C-IrO₂ Nanosheet-1]

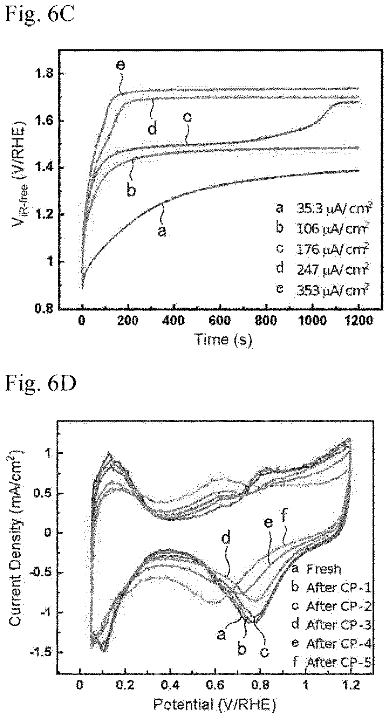

The effect of the added amount of the IrO₂ nanosheet promoter on the electrocatalytic reaction was studied. The results of the reversal resistance test of Pt/C-IrO₂ nanosheet-3 and Pt/C-IrO₂ nanosheet-1 composite catalysts are shown in Fig. 6 (a) and Fig. 6 (c). In both cases, a second plateau was observed in the vicinity of 1.7 V (RHE). The Pt/C-IrO₂ nanosheet-3 began to rise to a second plateau at 500 seconds after starting CP-4, and the Pt/C-IrO₂ nanosheet-1 began to rise to a second plateau at 1000 seconds after starting CP-3.

The CV results after CP are shown in Fig. 6 (b) and Fig. 6 (d). The ECSA of the Pt/C-IrO₂ nanosheet-3 decreased from 78.7 m²/g initially to 33.6 m²/g after the CP (58% reduction). In the case of the Pt/C-IrO₂ nanosheet-1, the ECSA decreased from 94.7 m²/g to 46.5 m²/g (51% reduction). Further, an EDL region and quinone/hydroquinone redox peaks also appeared. In the EDL of the Pt/C-IrO₂ nanosheet-3, thicker quinone/hydroquinone redox peaks began to appear after CP-5.

As described above, the phenomenon of a rise in cell voltage in a PEFC operation under fuel (H₂) shortage conditions was simulated in a half-cell test with rotating electrodes in a reversal resistance test. Combined with the data obtained from the CV, a potential rise in the first plateau caused by the water electrolysis reaction and the second plateau associated with the carbon oxidation reaction were confirmed. Further, the addition of the IrO₂ nanosheet as a promoter suppressed the carbon oxidation reaction (the potential did not rise to the second plateau). In addition, the relationship between the added amount of the IrO₂ nanosheet promoter and the phenomenon of a potential rise was clarified. As a reversal-resistant anode catalyst, it is desirable to have high reversal resistance with as little IrO₂ as possible. The composite catalyst fabricated with 5-wt% IrO₂ nanosheets and 95-wt% Pt/C was used in the following experiment as the optimum ratio based on the results of the aforementioned study.

### [Characteristics Evaluation and Reversal Resistance Test of HOR Activity]

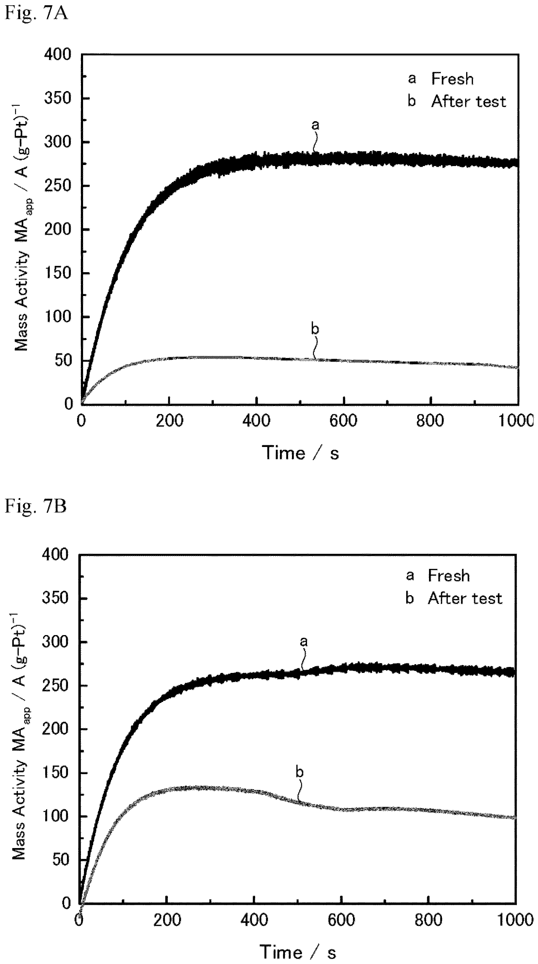

HOR was implemented on the Pt/C and the Pt/C-IrO₂ nanosheet-5 by CA (under hydrogen saturated conditions, 20 mV (RHE)) after the reversal resistance test, and MAapp and MAk were calculated. The CA of each catalyst is shown in Fig. 7 (a) and Fig. 7 (b).

In the case of the Pt/C, the initial MAapp was 270 A/g, which is similar to the value described in Non-Patent Document 1. After the reversal resistance test, the MAapp decreased to 50 A/g (80% reduction). On the other hand, in the case of the Pt/C-IrO₂ nanosheet-5, the initial MAapp was 260 A/g and the MAapp after the reversal resistance test was 125 A/g (50% reduction).

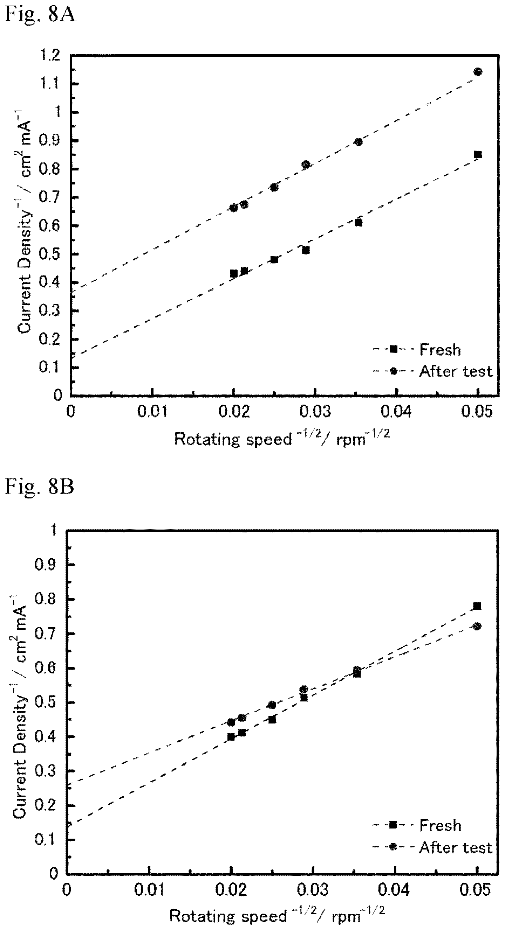

For the Pt/C and the Pt/C-IrO₂ nanosheet-5, the LSV was measured at various rotating speeds using a rotating electrode, and the HOR activity (MAk) was determined using the activation dominant current from the Koutecky-Levich (K-L) plot at 20 mV (RHE). The respective calculations were performed, and the K-L plots are shown in Fig. 8 (a) and Fig. 8 (b). The MAk of unused Pt/C was 940 A/g and was 345 A/g after the reversal resistance test (73% reduction).

On the other hand, the initial MAk of the Pt/C-IrO₂ nanosheet-5 was 910 A/g, and was 497 A/g after the reversal resistance test (55% reduction). It should be noted that this rate of change is consistent with the change in ECSA after the reversal resistance test.

The Pt/C and the Pt/C-IrO₂ nanosheet-5 composite catalysts before and after the reversal resistance test were then observed by TEM to study the relationship between the decrease in the ECSA and the HOR activity and the catalyst structure.

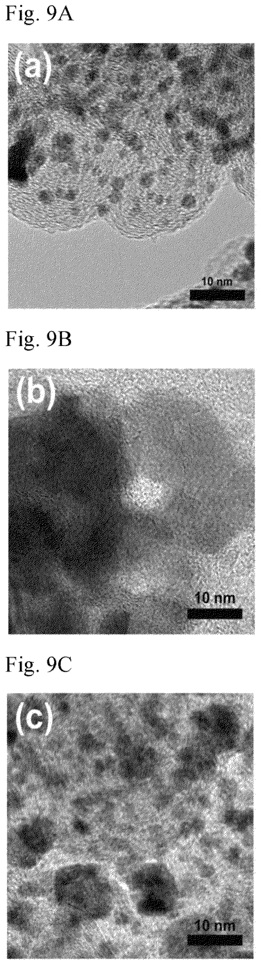

TEM images of the unused Pt/C and the Pt/C-IrO₂ nanosheet-5 before the reversal resistance test are shown in Fig. 9 (a) and Fig. 9 (c). The average particle sizes of the unused Pt/C and the Pt/C-IrO₂ nanosheet-5 composite catalysts were 3.5 nm and 4.4 nm, respectively.

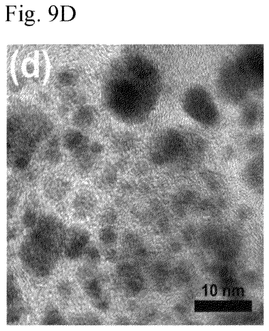

TEM images of the Pt/C and the Pt/C-IrO₂ nanosheet-5 after the reversal resistance test are shown in Fig. 9 (b) and Fig. 9 (d). As shown in Fig. 9 (b), Pt agglomeration was seen after the reversal resistance test. This form change is caused by the dissolution and re-precipitation of Pt species and the corrosion degradation of the carbon carrier. On the other hand, as shown in Fig. 9 (d), the Pt/C-IrO₂ nanosheet-5 had many small Pt nanoparticles with diameters of less than 5 nm even after the reversal resistance test. This suggests that carrier degradation due to carbon oxidation reaction in the composite catalyst was suppressed and the enlargement of Pt particles was prevented.

## Claims

1. An electrode catalyst comprising:
a composite catalyst obtained by mixing an iridium oxide (IrO₂) nanosheet with a Pt/C catalyst as a promoter.

2. The electrode catalyst according to claim 1, wherein
a weight ratio (percentage) of the IrO₂ nanosheet to a sum of the Pt/C and the IrO₂ nanosheet is within a range of 1% or more and 26% or less.

3. The electrode catalyst according to claim 1 or 2, wherein
a Pt:Ir (atomic ratio) constituting the composite catalyst is within a range of 1.5:1 to 50:1.
